# EUROPÄISCHE PATENTSCHRIFT

(11) **EP 2 828 802 B1**
(45) Veröffentlichungstag und Bekanntmachung des Hinweises auf die Patenterteilung: **13.01.2016**
(21) Anmeldenummer: 13718101.2
(22) Anmeldetag: 22.03.2013
(51) Int. Cl.: G06K 19/077, H01Q 9/26

(54) **RFID-TRANSPONDER**
RFID TRANSPONDER
TRANSPONDEUR RFID

(30) Priorität: 23.03.2012 DE 102012102505
(43) Veröffentlichungstag der Anmeldung: 28.01.2015
(73) Patentinhaber: Harting Electric GmbH & Co. KG, 32339 Espelkamp (DE)
(72) Erfinder: TRÖGER, Lutz, 49082 Osnabrück (DE)
(86) Internationale Anmeldenummer: PCT/DE2013/100112
(87) Internationale Veröffentlichungsnummer: WO 2013/139336

(56) Entgegenhaltungen:
- EP-A1- 2 256 673
- WO-A1-02/15139
- WO-A2-2004/107251
- US-A1- 2008 024 309

## Beschreibung

Die Erfindung betrifft einen RFID-Transponder nach dem Oberbegriff des Anspruches 1.

Gegenwärtig werden in vielen Bereichen, vor allem auch im Logistikbereich, sehr intensiv und nutzbringend RFID-Systeme eingesetzt. In vielen Fällen sind dabei sehr kompakte, flache RFID-Transponder notwendig.

### Stand der Technik

RFID-Transponder für solche Anwendungen sind beispielsweise aus der EP 2 256 673 A1 bekannt. Hier wird ein Trägerelement zweiseitig, zumindest teilweise mit einer Metallisierung versehen. Die elektrisch verbundenen, eine Antenne bildenden Metallisierungen sind an einem auf dem Trägerelement vorgesehenen Chip angeschlossen.

Nachteilig wirkt sich bei dieser und ähnlichen Lösungen aus, dass die RFID-Transponder immer in mindestens eine Raumrichtung nicht abstrahlen. Dieser sog. Blind-Spot ist identisch mit der Dipolachse der Antenne und wirkt sich vor allem dann aus, wenn ein Transponder auf sich beweglichen Gegenständen angebracht ist und eine Ausleseeinheit sich möglicher Weise im Blind-Spot des RIFD-Transponders befindet.

Aus dem Stand der Technik weiterhin bekannte Lösungen wie zum Beispiel Smart-Labels mit zwei Dipolachsen wirken diesem Problem zwar entgegen, sind jedoch sind für einen Einsatz auf Metalloberflächen nicht geeignet.

### Aufgabenstellung

Der Erfindung liegt daher die Aufgabe zugrunde, einen RFID-Transponder so auszubilden, dass er für den Einsatz auf einer Metalloberfläche geeignet ist und das Problem des auftretenden Blind-Spots nicht aufweist.

Diese Aufgabe wird durch die Erfindung entsprechend dem kennzeichnenden Anspruch 1 gelöst.

Vorteilhafte Ausgestaltungen der Erfindung sind in den Unteransprüchen angegeben.

Bei der Erfindung handelt es sich um einen RFID-Transponder, der aus einem dielektrischen Trägerelement, auf welchem ein Chip und zwei Antennen angeordnet sind, gebildet wird. Der Chip umfasst dabei zumindest einen Sende- und einen Empfangsschaltkreis, sowie einen Speicher. Auf die genauere elektrische Funktionsweise des Chips wird in der Anmeldung nicht eingegangen, da diese nicht relevant ist.

Die Antennen werden aus einer Metallschicht gebildet, welche auf der Oberfläche des Trägerelements aufgebracht ist. Dabei handelt es sich bei dem Trägerelement um ein Bauteil, welches vorzugsweise im MID-Verfahren mit einer metallischen, elektrisch leitenden Oberfläche beschichtet wurde. Diese im MID-Verfahren aufgebrachte Oberfläche wirkt als Antenne auf dem Trägerelement.

Durch eine spezielle Ausbildung des Trägerelements, als quaderförmiges Bauteil, und einer metallischen Beschichtung an vier umlaufenden Seiten des Trägerelements bildet sich erfindungsgemäß eine Antenne mit einem Dipol aus.

Erfindungsgemäß besteht der RFID-Transponder aus zwei solcher, jeweils als Antenne ausgebildeter Trägerelemente, welche vorzugsweise in einem rechten Winkel zueinander angeordnet sind. Die beiden Trägerelemente sind erfindungsgemäß einstückig und zweckmäßig als ein Spritzgussbauteil hergestellt. Bei Verwendung eines entsprechenden Substratmaterials ist eine Beschichtung des so entstandenen Grundkörpers im MID-Verfahren möglich um die Antennen auf der Oberfläche auszubilden.

Die mit der Erfindung erzielten Vorteile bestehen insbesondere darin, dass die orthogonale Anordnung der zwei Antennen das Auftreten eines Blind-Spots verhindert. Speziell ist die Ausbildungsform der Trägerelemente für eine Nutzung des RFID-Transponders auf zwei metallischen Oberflächen vorgesehen. Dabei koppeln die Antennen des RFID-Transponders magnetisch mit der metallischen Oberfläche, auf der der RFID-Transponder genutzt wird, um die Strahlungscharakteristik des RFID-Transponders zu vergrößern.

Ganz speziell ist der RFID-Transponders zur Nutzung an zwei, sich orthogonal kreuzenden Metallträgern vorgesehen. So bietet der erfindungsgemäße RFID-Transponder die Möglichkeit, an zwei sich kreuzenden, metallischen Stäben oder Trägern angebracht und genutzt zu werden.

Dabei ist eine isolierende Schicht zwischen der metallisierten Oberfläche des RFID-Transponders und der metallischen Oberfläche, auf welcher der RFID-Transponder genutzt wird vorgesehen. Die isolierende Schicht kann ebenso als isolierendes Gehäuse um den RIFD-Transponder ausgebildet sein.

Weitere Ausgestaltungen der Erfindung sind in den Unteransprüchen beschrieben.

### Ausführungsbeispiel

Ausführungsbeispiele der Erfindung sind in den Zeichnungen dargestellt und werden im Folgenden näher erläutert. Es zeigen:
- Fig. 1a: einen RFID-Transponder in T-Bauform;
- Fig. 1b: eine Detailansicht des RFID-Transponders aus Fig. 1a;
- Fig. 2: einen RFID-Transponder in L-Bauform;
- Fig. 3: einen weiteren RFID-Transponder in T-Bauform; und
- Fig. 4: einen RFID-Transponder aus Fig. 3 im Einsatz.

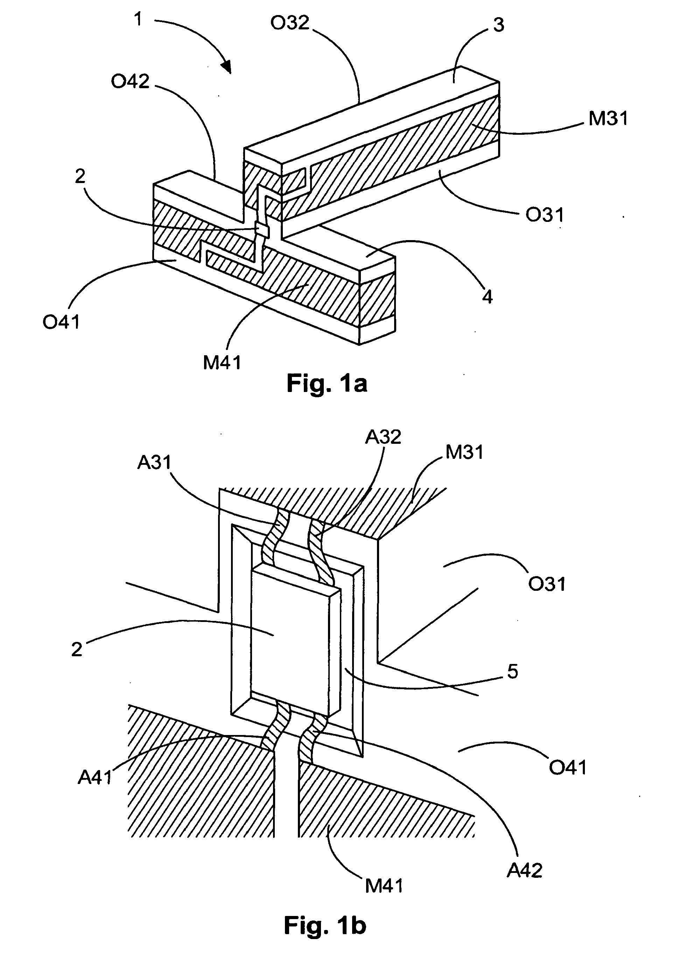

In der Fig.1 a ist ein in räumlicher Darstellung abgebildeter, erfindungsgemäßer RFID-Transponder 1 dargestellt. Die Ausführungsform zeigt den RFID-Transponder 1, der aus zwei Trägerelementen 3, 4 gebildet ist, welche in einer T-Bauform angeordnet sind.

Dabei sind die Trägerelemente 3, 4 in verschiedenen Ebenen zueinander angeordnet und einstückig miteinander verbunden. So ist in dieser gezeigten Ausführungsform das Trägerelement 4 unterhalb des Trägerelementes 3 angeordnet. Durch die Anordnung der Trägerelemente 3, 4 in verschiedenen Ebenen eignet sich der RFID-Transponder zur Anbringung an zwei sich kreuzende, metallische Stäbe.

Die Trägerelemente 3, 4 sind jeweils längliche, hier quaderförmig ausgebildete Elemente, die aus einem dielektrischen, zur MID-Beschichtung geeigneten Material bestehen. Auf zwei, jeweils im Verhältnis zu den anderen Oberflächen, langen Oberflächen 031, 032, 041, 042 ist den Trägerelementen 3, 4 jeweils eine Metallisierung M31, M32, M41, M42 aufgebracht. Die Metallisierungen M31, M32, sowie die Metallisierungen M41, M42 sind jeweils über zwei schmale Seiten der Trägerelemente 3, 4 miteinander leitend verbunden und bilden so jeweils eine Antenne 6, 7 auf jedem der Trägerelemente 3, 4.

Die zwei Antennen 6, 7 verfügen jeweils über zwei elektrische Anschlüsse A31, A32, A41, A42, mittels welcher die Antennen 6, 7 an einen Chip 2 elektrisch angeschlossen sind. Der Chip umfasst dabei zumindest einen Sende- und Empfangsschaltkreis, sowie einen Speicher. Durch den Anschluss der zwei vorzugsweise orthogonal, aber zumindest gewinkelt zueinander ausgerichteten Antennen 6, 7 optimiert sich erfindungsgemäß die Strahlungscharakteristik des RFID-Transponders 1.

Eine Detailansicht des Chips 2 aus Fig. 1a ist in der Fig. 1b dargestellt. Zu erkennen ist der Chip 2 welcher in einer Vertiefung 5 im Grenzbereich zwischen den Trägerelementen 3, 4 angeordnet ist. Die Vertiefung 5 dient lediglich zum Schutz des Chips 2, dass dieser vor mechanischen Einwirkungen geschützt ist - wobei die Vertiefung 5 auch wieder mit einer Kunststoffmasse o. ä. vergossen werden kann. Mittels der elektrischen Anschlüsse A31, A32, A41, A42 sind die Antennen 6, 7 elektrisch mit dem Chip 2 verbunden.

Die elektrischen Anschlüsse A31, A32, A41, A42 sind ebenfalls durch MID-Technologie erzeugte, metallische Beschichtungen auf der Oberfläche der Trägerelemente 3, 4, können jedoch auch durch angelötete Drähte oder anders realisiert werden. Ebenso kann der Chip auch an einer anderen Stelle auf einem der Trägerelemente 3, 4 angeordnet werden, wo sich eine elektrische Kontaktierung der beiden Antennen 6, 7 anbietet.

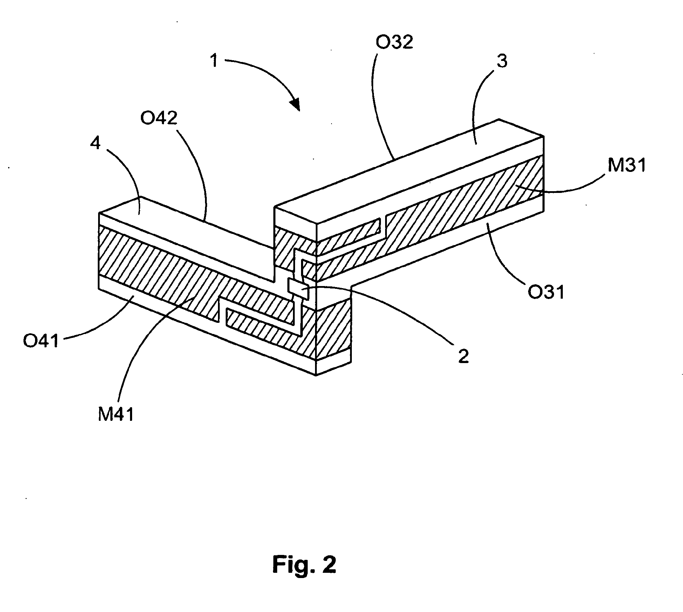

Die Fig. 2 zeigt eine weitere, erfindungsgemäße Ausführungsform eines RFID-Transponders 1. In dieser sind die Trägerelemente 3, 4 in einer L-Bauform zueinander angebracht. Wie auch in Fig. 1 a gezeigt, ist das Trägerelement 4 hier unter dem Trägerelement 3 angebracht, so dass sich die beiden Trägerelemente 3, 4 in verschiedenen Ebenen befinden.

Weitere, erfindungsgemäße Bauformen des RFID-Transponders 1, wie z.B. eine gekreuzte Form, sind je nach Einsatzort des RFID-Transponders 1 denkbar.

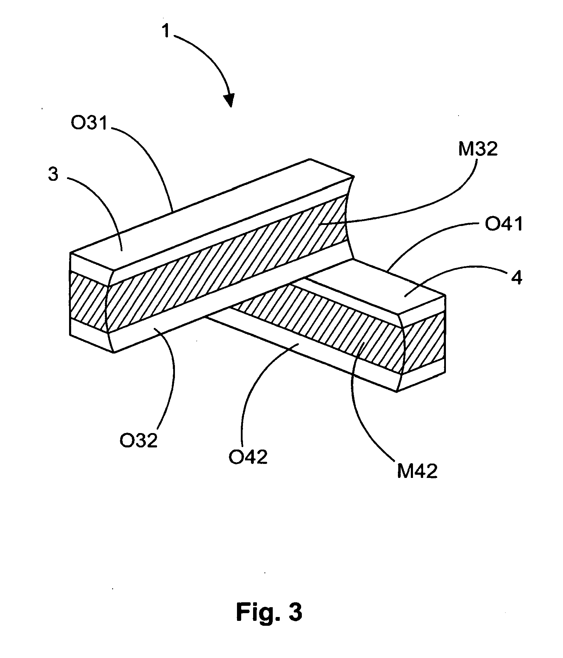

Eine weitere, erfindungsgemäße Ausführungsform eines RFID-Transponders in T-Bauform - wie schon in Fig. 1 dargestellt - ist in Fig. 3 gezeigt. Diese Ausführungsform weist zusätzlich eine konkave Form der Oberflächen 032 und 042 auf. Durch diese konkave Form ist eine bessere magnetische Kopplung der Antenne mit runden Metallträgern 8, 9 möglich, auf welchem der RFID-Transponder 2 zum Einsatz kommen soll.

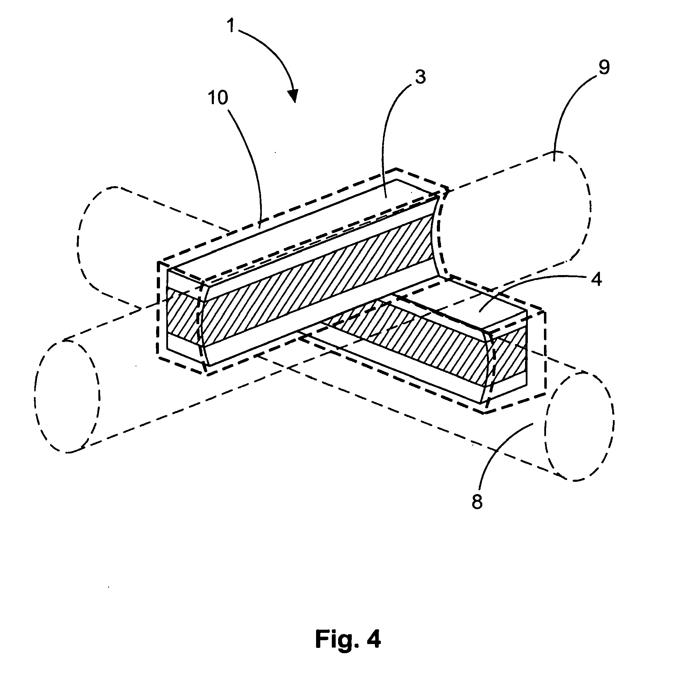

Ein solcher Einsatz des RFID-Transponders 1 auf runden Metallträgern 8, 9 ist in der Fig. 4 dargestellt. Angedeutet sind die zwei, sich kreuzende, runde Metallträger 8 ,9 dargestellt. Der erfindungsgemäße RFID-Transponder 1 ist mit einem Gehäuse 10 versehen, welches den RFID-Transponder elektrisch gegen die Metallträger 8, 9 isoliert. Der RFID-Transponder ist so an den Metallträgern 8, 9 angebracht, dass die konkave Oberfläche 032 des Trägerelementes 3 an dem runden Metallträger 9 anliegt, und dass die konkave Oberfläche 042 des Trägerelements 4 an dem runden Metallträger 8 anliegt.

### Bezugszeichenliste

- 1: RFID-Transponder
- 2: Chip
- 3: Trägerelement
- 4: Trägerelement
- 5: Vertiefung
- 6: Antenne von 3
- 7: Antenne von 4
- 8: Metallträger
- 9: Metallträger
- 10: isolierendes Gehäuse

- 031: erste Oberfläche von 3
- 032: zweite Oberfläche von 3
- 041: erste Oberfläche von 4
- 042: zweite Oberfläche von 4

- M31: erste Metallisierung von 3
- M32: zweite Metallisierung von 3
- M41: erste Metallisierung von 4
- M42: zweite Metallisierung von 4

- A31: erster elektrischer Anschluss von 3
- A32: zweiter elektrischer Anschluss von 3
- A41: erster elektrischer Anschluss von 4
- A42: zweiter elektrischer Anschluss von 4

## Patentansprüche

1. RFID-Transponder (1), bestehend aus einem Chip (2), einer ersten Antenne (6) und einem, vorzugsweise länglich ausgebildeten, dielektrischen ersten Trägerelement (3),
wobei das erste Trägerelement (3) auf einer ersten Oberfläche (031) zumindest abschnittsweise mit einer ersten Metallisierung (M31) bedeckt ist, und
wobei das erste Trägerelemente (3) auf einer der ersten Oberfläche (O31) gegenüberliegenden, zweiten Oberfläche (032), zumindest abschnittsweise mit einer zweiten Metallisierung (M32) bedeckt ist, wobei die erste Metallisierung (M31) und die zweite Metallisierung (M32) miteinander elektrisch leitend, die erste Antenne (6) ausbildend, verbunden sind,
wobei die erste Antenne (6) zwei elektrische Anschlüsse (A31, A32) aufweist,
und wobei der Chip (2) über die Anschlüsse (A31, A32) elektrisch mit der ersten Antenne (6) verbunden ist,
wobei der RFID-Transponder (1) ein zweites Trägerelement (4) aufweist,
wobei die Trägerelemente (3, 4) einteilig ausgeführt sind,
und wobei der Chip (2) über elektrische Anschlüsse (A41, A42) des zweiten Trägerelementes (4) elektrisch mit einer zweite Antenne (7) verbunden ist.
wobei das zweite Trägerelement (4) auf einer ersten Oberfläche (041) zumindest abschnittsweise mit einer ersten Metallisierung (M41) bedeckt ist,
wobei das zweite Trägerelemente (4) auf einer der ersten Oberfläche (O41) gegenüberliegenden, zweiten Oberfläche (042), zumindest abschnittsweise mit einer zweiten Metallisierung (M42) bedeckt ist, wobei die erste Metallisierung (M41) und die zweite Metallisierung (M42) miteinander elektrisch leitend, die zweite Antenne (7) ausbildend, verbunden sind, **dadurch gekennzeichnet,**
**dass** die vorzugsweise länglich ausgebildeten Trägerelemente (3, 4) in verschiedenen Ebenen angeordnet sind.

2. RFID-Transponder (1) nach einem der vorstehenden Ansprüche,
**dadurch gekennzeichnet,**
**dass** die vorzugsweise länglich ausgebildeten Trägerelemente (3, 4) zueinander in etwa orthogonal ausgerichtet sind.

3. RFID-Transponder (1) nach einem der vorstehenden Ansprüche,
**dadurch gekennzeichnet,**
**dass** zumindest eine der metallisierten Oberflächen (031, 032, 041, 042) eine konkave Form aufweist.

4. RFID-Transponder (1) nach einem der vorstehenden Ansprüche,
**dadurch gekennzeichnet,**
**dass** der RFID-Transponder (2) von einem elektrisch isolierenden Gehäuse (10) umgeben ist.

5. RFID-Transponder (1) nach Anspruch 4, **dadurch gekennzeichnet, dass** das Gehäuse (10) in einem Spritzgussverfahren hergestellt, direkt um dem RFID-Transponder (1) geformt ist.

## Claims

1. An RFID transponder (1), consisting of a chip (2), a first antenna (6) and a dielectric first carrier member (3) preferably having an oblong configuration,
the first carrier member (3) being covered with a first metallization (M31) at least in sections on a first surface (031), and
the first carrier member (3) being covered with a second metallization (M32) at least in sections on a second surface (032) opposite to the first surface (031),
the first metallization (M31) and the second metallization (M32) being electrically conductively connected to each other, forming the first antenna (6),
the first antenna (6) including two electrical connections (A31, A32),
and the chip (2) being electrically connected to the first antenna (6) via the connections (A31, A32),
the RFID transponder (1) including a second carrier member (4),
the carrier members (3, 4) being configured in one piece,
and the chip (2) being electrically connected to a second antenna (7) via electrical connections (A41, A42) of the second carrier member (4),
the second carrier member (4) being covered with a first metallization (M41) at least in sections on a first surface (041),
the second carrier member (4) being covered with a second metallization (M42) at least in sections on a second surface (042) opposite to the first surface (041),
the first metallization (M41) and the second metallization (M42) being electrically conductively connected to each other, forming the second antenna (7), **characterized in that**
the carrier members (3, 4), which preferably have an oblong configuration, are arranged in different planes.

2. The RFID transponder (1) according to any of the preceding claims, **characterized in that**
the carrier members (3, 4), which preferably have an oblong configuration, are oriented approximately orthogonally in relation to each other.

3. The RFID transponder (1) according to any of the preceding claims, **characterized in that**
at least one of the metallized surfaces (031, 032, 041, 042) has a concave shape.

4. The RFID transponder (1) according to any of the preceding claims, **characterized in that**
the RFID transponder (2) is surrounded by an electrically insulating housing (10).

5. The RFID transponder (1) according to claim 4, **characterized in that**
the housing (10), manufactured in an injection molding process, is molded directly around the RFID transponder (1).

## Revendications

1. Transpondeur RFID (1), composé d'une puce (2), d'une première antenne (6) et d'un premier élément support (3) diélectrique réalisé de préférence de manière allongée,
le premier élément support (3) étant revêtu, au moins par tronçons, d'une première métallisation (M31) sur une première surface (O31), et
le premier élément support (3) étant revêtu, au moins par tronçons, d'une deuxième métallisation (M32) sur une deuxième surface (032) opposée à la première surface (031),
la première métallisation (M31) et la deuxième métallisation (M32) étant reliées l'une à l'autre de manière électro-conductrice et en formant la première antenne (6),
la première antenne (6) présentant deux raccords électriques (A31, A32),
et la puce (2) étant électriquement reliée à la première antenne (6) par l'intermédiaire des raccords (A31, A32),
le transpondeur RFIID (1) présentant un deuxième élément support (4),
les éléments support (3, 4) étant réalisés d'un seul tenant,
et la puce (2) étant électriquement reliée à une deuxième antenne (7) par des raccords électriques (A41, A42) du deuxième élément support (4),
le deuxième élément support (4) étant revêtu, au moins par tronçons, d'une première métallisation (M41) sur une première surface (041),
le deuxième élément support (4) étant revêtu, au moins par tronçons, d'une deuxième métallisation (M42) sur une deuxième surface (042) opposée à la première surface (041),
la première métallisation (M41) et la deuxième métallisation (M42) étant reliées l'une à l'autre de manière électro-conductrice et en formant la deuxième antenne (7), **caractérisé en ce que**
les éléments support (3, 4) qui sont de préférence réalisés de manière allongée sont agencés dans différents plans.

2. Transpondeur RFID (1) selon l'une des revendications précédentes, **caractérisé en ce que**
les éléments support (3, 4) réalisés de préférence de manière allongée sont orientés de manière approximativement orthogonale l'un par rapport à l'autre.

3. Transpondeur RFID (1) selon l'une des revendications précédentes, **caractérisé en ce que**
au moins l'une des surfaces métallisées (031, 032, 041, 042) présente une forme concave.

4. Transpondeur RFID (1) selon l'une des revendications précédentes, **caractérisé en ce que**
le transpondeur RFID (2) est entouré d'un boîtier (10) électriquement isolant.

5. Transpondeur RFID (1) selon la revendication 4, **caractérisé en ce que**
le boîtier (10) est fabriqué selon un procédé de moulage par injection et est réalisé directement autour du transpondeur RFID (1).
